# EUROPEAN PATENT SPECIFICATION

(11) **EP 1 737 579 B1**
(45) Date of publication and mention of the grant of the patent: **09.01.2008**
(21) Application number: 05732132.5
(22) Date of filing: 12.04.2005
(51) Int. Cl.: B05B 7/08, B05B 1/20, B05B 13/02, B05B 13/04

(54) **MANUFACTURING LINE FOR GYPSUM BOARDS**
HERSTELLUNGSLINIE FÜR GIPSPLATTEN
CHAINE DE FABRICATION DE PLAQUES DE PLATRE

(30) Priority: 13.04.2004 US 822783
(43) Date of publication of application: 03.01.2007
(73) Proprietor: LAFARGE PLATRES, 84915 Avignon Cedex (FR)
(72) Inventor: COLBERT, Elizabeth, A., Blacklick, OH 43004 (US); BINGAMAN, Andrew, B., Dillsburg, PA 17019 (US); STATLER, Scott, E., Yorktown Heights, NY 10598 (US); BUDROE, Michael, J., Ashburn, VA 20148 (US); WELDON, Walter, Gainesville, VA 20155 (US)
(74) Representative: Mérigeault, Shona
(86) International application number: PCT/EP2005/003990
(87) International publication number: WO 2005/099907

(56) References cited:
- DD-A1- 142 872
- US-A1- 2002 086 114
- US-A1- 2003 085 306

## Description

### BACKGROUND OF THE INVENTION

### 1. Field of the Invention

The present invention relates to a manufacturing line for gypsum boards, and in particular to a coating spray apparatus and method of using for a manufacturing line for gypsum boards.

### 2. Discussion of Related Art

In a conventional gypsum board manufacturing process, a slurry of gypsum is sandwiched between two layers of facing sheets. After the gypsum core sets, the core, together with the facing sheets, is cut into board lengths. The cut boards are then sent through a dryer to substantially dry the gypsum core.

According to WO 02/12144, it is known to apply a coating to one side of the board. WO 02/058902 teaches applying a coating to a wet gypsum board prior to drying the gypsum board. In addition, U.S. Patent No. 6,663,979 teaches applying a coating to a gypsum board either before or after drying of the board.

Document US 2003/0085306 discloses a manufacturing line and a spray arm with all the features of the preamble of claim 1 and 13. Document DD 142872 discloses a method of spraying a coating on a gypsum board with all the steps of the preamble of claim 20

However, the gypsum board manufacturing line may be used for making different types of boards. Some of the boards may be coated with coating equipment as discussed above, and some boards may not be coated.

### OBJECTS AND SUMMARY

Accordingly, it is an object of one embodiment of the present invention to provide a coating spray apparatus which can be pivoted from an operative position, wherein the spray apparatus is over the gypsum board manufacturing line to an inoperative position, wherein the spray apparatus is remote from the line and does not interfere with regular operations.

It is a further object of the present invention to provide a coating spray apparatus for a gypsum board manufacturing line that is able to apply the spray in a fine, easily controlled manner.

According to a first embodiment of the present invention, a manufacturing line for gypsum boards includes a conveyor for moving gypsum boards in a line; a spray arm having a pivot at one end thereof for supporting a spray arm in a pivotable manner; a base frame mounted adjacent the convey; a support for the pivot mounted on the base frame so that the spray arm can be pivoted from an operative position wherein the spray arm extends over the conveyor to an inoperative position; a plurality of spray nozzles arranged on the spray arm for spraying a coating on the gypsum boards on the conveyor; and a pump system on the base frame to deliver the coating to the plurality of spray nozzles, wherein the plurality of nozzles are arranged in clusters and the nozzles in each cluster are staggered so that at least some of the nozzles in each cluster are at different distances from the spray arm with respect to each other.

According to another embodiment of the present invention, a spray arm for a manufacturing line for gypsum boards includes a support beam; a pivot at one end thereof for supporting the spray arm in a pivotable manner so that the spray arm can be pivoted at least about 90 degrees from an operative position to an inoperative position; and a plurality of spray nozzles arranged on the support beam for spraying a coating on gypsum boards, the plurality of nozzles arranged in clusters and the nozzles in each cluster are staggered so that at least some of the nozzles in each cluster are at different distances from the support beam with respect to each other.

According to another embodiment, a method according to the present invention of spraying a coating on a gypsum board on a gypsum board manufacturing line includes providing a spray arm having a plurality of nozzles attached thereto over the gypsum board manufacturing line; the plurality of nozzles are arranged in clusters and the nozzles in each cluster are staggered so that at least some of the nozzles in each cluster are at different distances from the spray arm with respect to each other, and the nozzles are further arranged such that the spray from each nozzle covers less than an entire width of the gypsum board on the line; emitting a coating from the spray nozzles such that a plurality of overlapping sprays are sprayed onto the gypsum board in succession; and wherein the nozzles are arranged such that a substantially uniform coating is applied to the board.

### BRIEF DESCRIPTION OF THE DRAWINGS

Figure 1 discloses a schematic view of a portion of a gypsum board manufacturing line including an embodiment of the present invention.

Figure 2 discloses a side view of a portion of an embodiment of the present invention.

Figure 3 is a side view of a pumping system in an embodiment of the present invention.

Figures 4A and 4B illustrate details of a spray arm of an embodiment of the present invention.

Figure 5 illustrates the application of a plurality of layers of coating according to an embodiment of the present invention.

Figure 6 illustrates a plumbing schematic of an embodiment of the present invention.

Figure 7 illustrates another plumbing schematic of a different portion of the embodiment of Figure. 6.

Figure 8 illustrates yet another portion of an embodiment of the present invention.

### DETAILED DESCRIPTION OF THE PREFERRED EMBODIMENTS

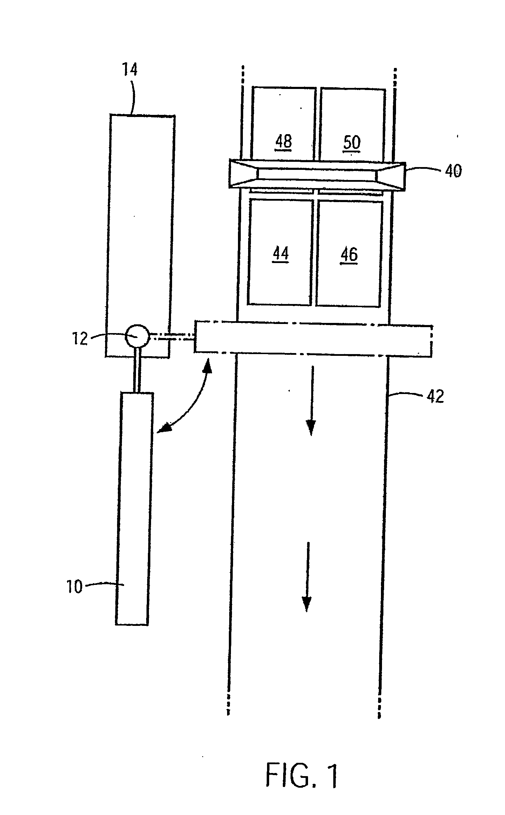

Figures 1-8 illustrate a preferred embodiment of the present invention. The preferred embodiment includes an apparatus for spraying a coating onto gypsum boards, after the gypsum has set, but before the boards have been sent through a dryer. The coating is intended to provide a finish on the gypsum boards which facilitates providing a finished surface on the boards. In a preferred embodiment, the coating includes a mineral filler and is designed to match a joint compound used to finish joints between adjacent boards.

Turning attention to Figure 1, an overview of a portion of a line on which the gypsum boards are dried is shown, with the preferred embodiment of the present invention in place. The line includes a conveyor assembly 42 for conveying the set, but wet, gypsum boards 44, 46, 48, 50 through the dryer.

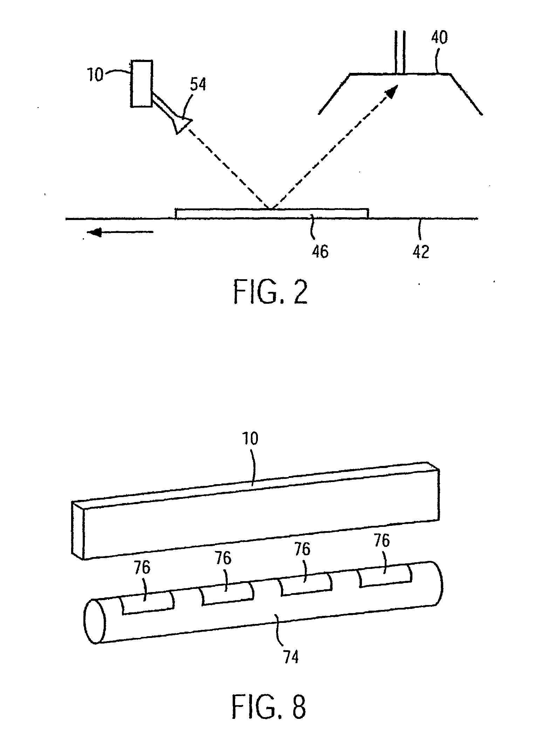

In this embodiment, a spray arm 10 of the present invention is arranged above the conveyor assembly 42, prior to the boards 44, 46, 48, 50 reaching the dryer. The spray arm 10 is mounted to a skid or frame 14 in a pivotable manner so that the spray arm 10 can be pivoted at least 90 to 180 degrees from an inoperative position illustrated in solid lines to an operative position illustrated in dashed lines. As best seen in Figure 2, the spray arm 10 is arranged downstream of a hood 40, both of which are suspended above the conveyor 42. The spray arm 10 and the hood 40 are preferably arranged such that particles emitted from the spray arm 10 that reflect off of the boards 44, 46, 48 50 are picked up by the hood 40, which includes conventional exhaust and/or filtering equipment.

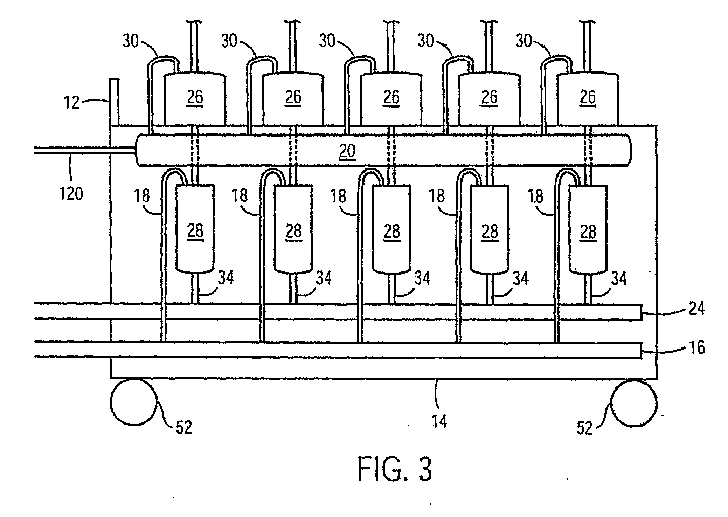

The coating apparatus includes several components. For example, the skid 14 (Figure 3) is provided for supporting pumps and related equipment. As illustrated in Figure 3, the skid 14 may be provided on wheels 52 so that the skid can be rolled into and out of place, as needed. At one end of the skid 14 is a pivot 12 which rotatably supports the spray arm 10 so that the spray arm 10 can be rotated into a working or operative position over the conveyor 42 or away from the conveyor 42, as illustrated in Figure 1.

The skid 14 includes a plurality of pumps 28, each of which is driven by a respective pump motor 26. In the preferred embodiment, the pump motors 26 are air driven motors such that the speed of the output thereof can be controlled by the air pressure that is delivered to the pump motors 26. In the preferred embodiment, five pumps and pump motors are provided on the skid. However, only four are actually used for applying the coating. The fifth pump and pump motor are provided to serve as a back-up in the event that one of the four pumps fails. In a preferred embodiment, the pumps are manufactured by Graco.

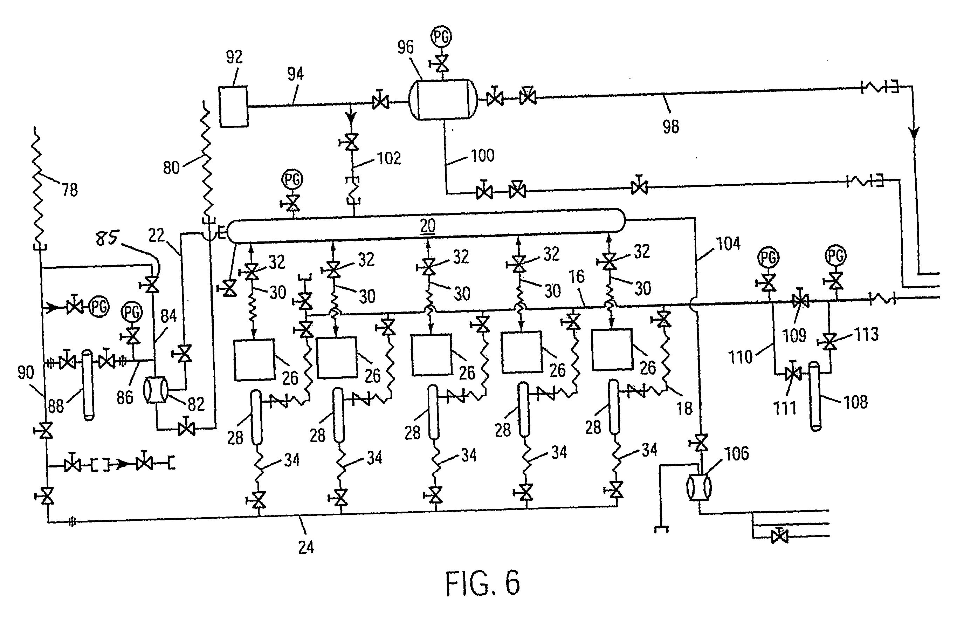

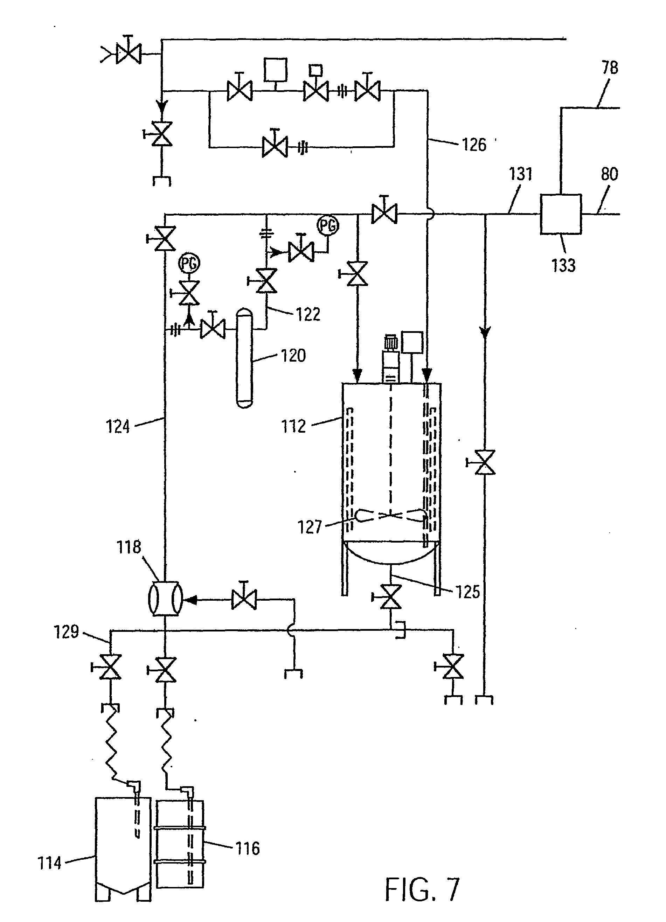

A suction header 24 delivers a coating formula to each of the pumps 28 via respective hoses 34. The coating formula is delivered to the suction header 24 from pipe 80 (Figures 6 and 7) which is described in greater detail below. At the discharge end of each of the pumps 28, a hose 18 delivers the coating formula under high pressure to a spray feed header 16. In the preferred embodiment, the coating formula is output from the pumps at a pressure of about 2250 psi. The higher the pressure, the more coating formula is delivered to the boards. Thus, the delivery pressure of the coating formula may be varied depending upon the desired application. In general, the output pressure of the coating formula will typically be within the range of 1200 to 4500 psi. To achieve this range, the pump motors are supplied with air at a pressure of about 30-40 psi. However, the present invention is not limited to the pressure ranges set forth herein.

A control air manifold 20 is also present on the skid 14 adjacent the pump motors 26. Separate hoses 30 connect the control air manifold 20 to the respective pump motors 26 to provide the motive force for the pump motors 26.

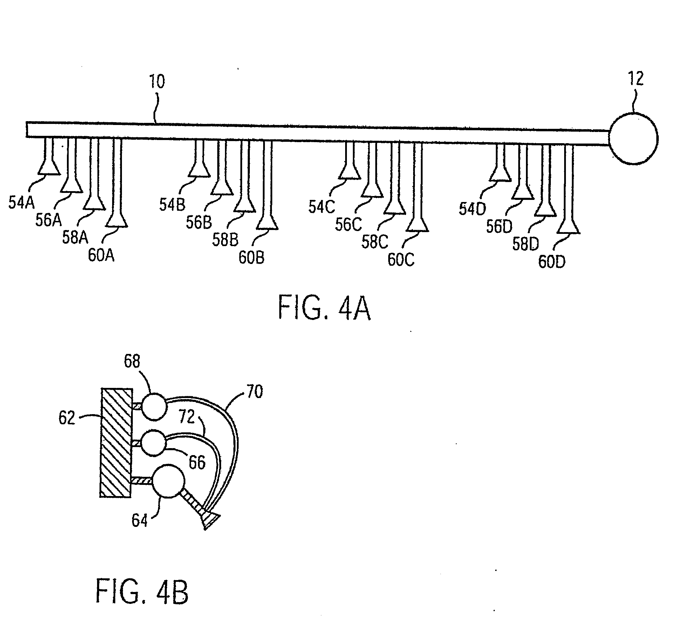

Figures 4A and 4B illustrate the spray arm 10. As can be seen at the right side of Figure 4A, the spray arm 10 is connected to a pivot 12, which is fixed to the skid 14. The spray arm 10 includes a support beam 62 which supports sixteen nozzles (54A, 56A, 58A, 60A, 54B, 56B, 58B, 60B, 54C, 56C, 58C, 60C, 54D, 56D, 58D, 60D) and at least three conduits. A first conduit 64 delivers the high pressure coating formula from the spray feed header 16 to each of the nozzles 54, 56, 58, 60. A second conduit 66 delivers atomizing air to each of the nozzles 54, 56, 58, 60 via hoses 72 so that the coating formula can be uniformly sprayed onto the boards 44, 46, 48, 50. A third conduit 68, which is also attached to the support beam 62, delivers air under pressure through respective hoses 70 to control each of the nozzles 54, 56, 58, 60.

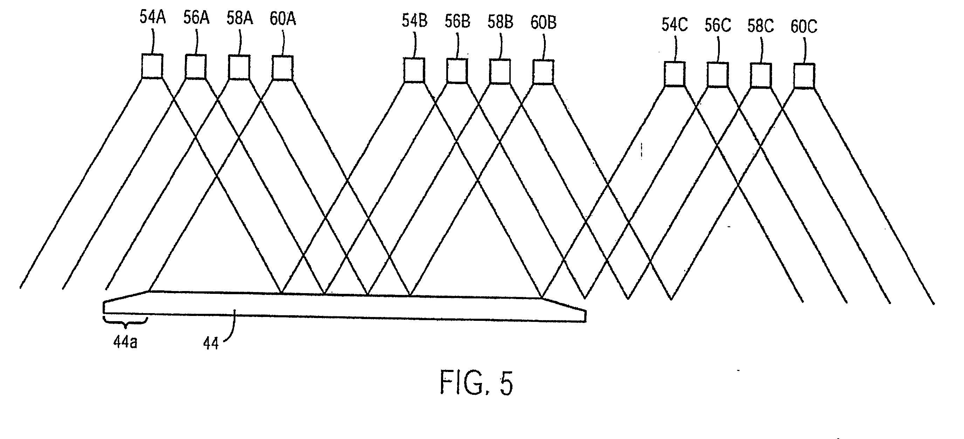

As can be best seen in Figures 4A and 5, the sixteen nozzles are arranged in four clusters of four nozzles in each cluster. The nozzles in each cluster are staggered such that the spray from nozzle 60A, for example, reaches the board prior to the spray from nozzle 58A, which reaches the board prior to the spray from nozzle 56A, and which reaches the board prior to that from nozzle 54A. As a result, the board receives essentially four layers of coating in short succession. By applying the coating in four successive layers, better control over the spray can be achieved. In the preferred embodiment, the layers are applied in such short order that the layers of coating formula essential commingle and become one uniform layer on the board. In other words, the layers do not form four separate layers on the board when dried. Although the preferred embodiment uses four clusters of four nozzles, the present invention could be practiced with other combinations of nozzles. Furthermore, it is also not necessary to use all of the nozzles provided on the support beam 62. For example, one or more nozzles in each cluster could be turned off.

Figure 5 illustrates the overlapping nature of the spray from the nozzles. As can be seen in Figure 5, the left margin 44a of the board 44 receives only three layers of coating, i.e., from nozzles 54A, 56A, and 58A. The spray from nozzle 60A does not reach the far left edge 44a of the board 44. However, the remaining portions of the board are coated with substantially four layers. In other words, the nozzles are arranged such that the spray from nozzle 54A does not substantially overlap with the spray from nozzle 54B, nor is there any significant spacing therebetween. Similarly, the spray from nozzle 56A does not overlap with the spray from nozzle 56B, nor is there any significant space therebetween, etc. By using this spacing with the nozzles, a substantially uniform coat from four nozzles is applied to each portion of the board, except for the left margin 44a of the board 44.

In a preferred embodiment, the nozzles or spray heads are manufactured by Graco. Various size nozzles have been tried, including #25, 27, 29, 31, 33, and 35. However, the #31 nozzle provides a spray with a width of about twelve inches, as it contacts the board, when the pump motor pressure is about 40 psi and the system pressure is about 2250 psi. At these parameters, about four gallons of coating per 1000 square feet is applied at the rate of about 2.25 gallons per minute. However, the present invention can be practiced with other combinations of nozzles, pressures, and spray widths.

Figure 6 illustrates a schematic "plumbing" diagram of the preferred embodiment of the present invention. Most of the components illustrated in Figure 6 are arranged on the skid 14. For example, the control air manifold 20, the pump motors 26, the pumps 28, the spray feed header 16, and the suction header 24 are all located on the skid 14.

At the right side of Figure 6 is illustrated a bypass circuit 110 which is connected to a filter 108. If desired, valve 109 can be closed and valves 111, 113 can be opened to divert the coating formula through the filter 108 prior to delivery to the nozzles 54, 56, 58, 60 on the spray arm 10.

Hose 80 delivers the coating formula from a storage tank 133 located off of the skid 14 to a low pressure pump 82, which pumps the coating formula to the suction header 24. The coating formula may be delivered directly to the suction header 24 through pipes 84 and 90. Alternatively, by the manipulation of the valve 85, pipe 84 may be shut off, and the coating formula may be delivered to pipe 90 through a filter 88 and pipe 86. Thus, by controlling the valves in and about the filter 88, the coating formula may be delivered either directly to the suction header 24 or may be filtered through filter 88 prior to delivery to the suction header 24. The pump 82 is driven by compressed air received from the control air manifold 20.

Another hose 78 is connected to pipe 90 and can be used to deliver unused coating formula back to the storage tank 133, which is illustrated in Figure 7.

At the top of Figure 6 is illustrated a pump 92, which provides pressurized air to an atomizing air receiving tank 96 through pipe 94. Also extending from pipe 94 is a pipe 102 which delivers pressurized air to the control air manifold 20. Preferably, the pump 92 maintains the pressure in the control air manifold at approximately 100 psi. From the atomizing air receiving tank 96, a pipe 98 delivers atomizing air to the atomizing air delivery pipe 66, which is connected to the support beam 62 of the spray arm 10. See Figure 4B. In addition, a pipe 100 connects the atomizing air receiving tank 96 to the control air delivery pipe 68, which is also mounted to the support beam 62 of the spray arm 10.

The control air from the control air delivery pipe 68 is used to turn the nozzles 54, 56, 58, 60 on and off. The air is controlled by a solenoid (not illustrated). The solenoid is controlled by a timer that is coordinated with the drive mechanism for rollers associated with the conveyor 42. Preferably, the timer controls the solenoid and nozzles such that the coating is only sprayed from the nozzles while there is a board below the nozzles, so as to avoid wasting the coating. However, during normal continuous runs, the pumps 28 continue to operate and pressure is maintained in the conduit 64 even when the nozzles are turned off between boards.

The nozzles 54, 56, 58, 60 are air-actuated spray heads. When pressurized air is delivered by the conduit 68 to the nozzles, the nozzles are opened allowing the coating formula and atomizing air to flow through the nozzles. When the pressure in the conduit 68 is dropped, e.g., to atmospheric pressure, the nozzles are closed.

In the lower right corner of Figure 6 is illustrated a double diaphragm pump 106 which is used to clean out a drip/overspray pan 74, which is illustrated in Figure 8, and described later herein.

Figure 7 illustrates a storage tank 112. The storage tank 112 is filled with the coating formula by a pipe 126 that is connectable to a tanker truck. Alternatively the tank 112 can be filled with the coating formula delivered in drums or barrels 114. A tank 116 is also provided for clean-out.

The coating formula in the tank 112 may be circulated or stirred by a propellor blade 127 located within the tank 112. In addition, a drain 125 at the bottom of the tank can be used to recirculate the coating formula by means of a pump 118 and plumbing 124 so that the coating formula can be removed from the bottom of the tank 112 and redelivered to the top of the tank 112 to recirculate or stir the coating formula.

In addition, bypass plumbing 122 can be provided so that the coating formula can be bypassed through a filter 120 during the recirculation process so that the coating formula may be filtered, while it is being recirculated. In addition, pipe 129 can be used to drain off or remove coating formula from the system.

Pipe 131, which is connected to the pump 118 via plumbing 124, is used to deliver the coating formula from the tank 112 to an intermediate tank 133 illustrated schematically. The intermediate tank 133 can be located adjacent the skid 14, or in any convenient location, preferably near the skid.

During the operation of the spray apparatus, the operating pressure from the air control manifold 20 to the pump motors 26 is preferably in the range of 30-40 psi. However, higher or lower pressures may be used, as desired.

Because the spray arm 10 is connected to the skid 14 with a pivot 12, the spray arm 10 can be moved into position over the board conveyor 42, or can be pivoted so that it is no longer over the board conveyor 42.

In addition, as set forth above, the skid 14 can be mounted on wheels 52. However, in an alternative embodiment, the skid 14 may be permanently fixed to the plant floor.

As illustrated in Figure 8, a drip/overspray pan 74 is provided with four cutouts 76. The drip/overspray pan 74 and cutouts 76 are arranged such that the drip/overspray pan 74 can be secured to the support beam 62 of the spray arm 10 so that the drip/overspray pan 74 is located with the cutouts 76 in alignment with the four clusters of nozzles. The drip/overspray pan 74 can be used for rinsing or flushing the nozzles 54, 56, 58, 60 with water.

Although only preferred embodiments are specifically illustrated and described herein, it will be appreciated that many modifications and variations of the present invention are possible in light of the above teachings and within the purview of the appended claims without departing from the intended scope of the invention.

## Claims

1. A manufacturing line for gypsum boards, the manufacturing line comprising:
a conveyor (42) for moving gypsum boards (44,46,48,50) in a line;
a spray arm (10) having a pivot (12) at one end thereof for supporting the spray arm (10) in a pivotable manner;
a base frame (14) mounted adjacent the conveyor (42);
a support for the pivot (12) mounted on the base frame (14) so that the spray arm (10) can be pivoted from an operative position wherein the spray arm (10) extends over the conveyor (42) to an inoperative position;
a plurality of spray nozzles (54, 56, 58, 60) arranged on the spray arm (10) for spraying a coating on gypsum boards (44,46,48,50) on the conveyor (42); and
a pump system (18,26,28,34) on the frame (14) to deliver the coating to the plurality of spray nozzles (54, 56, 58, 60),
**characterised in that**, the plurality of nozzles (54,56,58,60) are arranged in clusters and the nozzles in each cluster are staggered so that at least some of the nozzles in each cluster are at different distances from the spray arm (10) with respect to each other.

2. The manufacturing line of claim 1, wherein the spray arm (10) is not over the conveyor (42) when the spray arm (10) is in the inoperative position.

3. The manufacturing line of claim 1 or 2, wherein when the spray arm (10) is in the operative position, the spray arm (10) is upstream of a dryer for the manufacturing line.

4. The manufacturing line of any one of claims 1 to 3, further comprising a tank (112) for holding the coating prior to spraying on the gypsum boards (44,46,48,50).

5. The manufacturing line of any one of claims 1 to 4, further comprising a controller for turning the spray on only when a board (44,46,48,50) is below the nozzles (54,56,58,60).

6. The manufacturing line of claim 5, wherein the controller is activated by a timer to control the spray.

7. The manufacturing line of any one of claims 1 to 6, wherein the nozzles (54,56,58,60) are activated by pressurized air.

8. The manufacturing line of any one of claims 1 to 7, further comprising one or more filters (88,108) for filtering the coating prior to delivery of the coating to the nozzles (54,56,58,60).

9. The manufacturing line of any one of claims 1 to 8, wherein the base frame (14) is mounted on wheels so that the base frame can be moved to a remote location.

10. The manufacturing line of any one of claims 1 to 9, wherein the pump system (18,26,28,34) includes a plurality of pumps (26,28) arranged in parallel.

11. The manufacturing line of any one of claims 1 to 10, wherein the coating includes a mineral filler.

12. The manufacturing line of any one of claims 1 to 11, further comprising means (66) for delivering atomizing air to the nozzles.

13. A spray arm (10) for a manufacturing line for gypsum boards (44, 46, 48, 50), the spray arm (10) comprising:
a support beam (62);
a pivot (12) at one end thereof for supporting the spray arm (10) in a pivotable manner so that the spray arm (10) can be pivoted at least about 90 degrees from an operative position to an inoperative position; and
a plurality of spray nozzles (54,56,58,60) arranged on the support beam (62) for spraying a coating on gypsum boards (44,46,48,50) **characterised in that**, the plurality of nozzles (54,56,58,60) are arranged in clusters and the nozzles in each cluster are staggered so that at least some of the nozzles in each cluster are at different distances from the support beam (62) with respect to each other.

14. The spray arm of claim 13, further comprising a controller for spraying the coating only when a board (44,46,48,50) is below the nozzles (54,56,58,60).

15. The spray arm of claim 14, wherein the controller is activated by a timer to control the spray.

16. The spray arm of any one of claims 13 to 15, wherein the nozzles (54, 56, 58, 60) are activated by pressurized air.

17. The spray arm of any one of claims 13 to 16, further comprising one or more filters (88, 108) for filtering the coating prior to delivery of the coating to the nozzles (54, 56, 58, 60).

18. The spray arm of any one of claims 13 to 17, wherein the coating includes a mineral filler.

19. The spray arm of any one of claims 13 to 18, further comprising means (66) for delivering atomizing air to the nozzles.

20. A method of spraying a coating on a gypsum board (44,46,48,50) on a gypsum board manufacturing line, the method comprising:
providing a spray arm (10) having a plurality of nozzles (54,56,58,60) attached thereto over the gypsum board manufacturing line; wherein the nozzles (54, 56, 58, 60) are arranged such that a substantially uniform coating is applied to the board (44,46,48,50); **characterised in that**,
the plurality of nozzles (54,56,58,60) are arranged in clusters and the nozzles in each cluster are staggered so that at least some of the nozzles in each cluster are at different distances from the spray arm (10) with respect to each other, and the nozzles (54, 56, 58, 60) are further arranged such that the spray from each nozzle covers less than an entire width of the gypsum board (44, 46, 48, 50) on the line;
emitting a coating from the spray nozzles (54, 56, 58, 60) such that a plurality of overlapping sprays are sprayed onto the gypsum board (44, 46, 48, 50) in succession; and

21. The method of claim 20, wherein the coating is applied to the gypsum before the board goes through a dryer.

22. The method of claim 20 or 21, wherein a timer is used to turn the spray on and off so that the spray is only emitted when a gypsum board (44, 46, 48, 50) is below the nozzles (54, 56, 58, 60).

23. The method of any one of claims 20 to 22, wherein the spray arm (10) is pivotally mounted, and further comprising the step of pivoting the spray arm (10) away from the manufacturing line after coating the gypsum board (44, 46, 48, 50).

24. The method of any one of claims 20 to 23, wherein the spray arm (10) is of any one of claims 13 to 19.

25. Use of the spray arm of any one of claims 13 to 19 for spraying a coating on a gypsum board.

26. The use of the device of claim 25 wherein the coating includes a mineral filler.

## Patentansprüche

1. Fertigungsstraße für Gipskartonplatten, wobei die Fertigungsstraße umfasst:
- einen Förderer (42) zum Bewegen von Gipskartonplatten (44, 46, 48, 50) in einer Reihe;
- einen Sprüharm (10), welcher einen Drehzapfen (12) an einem seiner Enden zum Tragen des Sprüharms (10) auf eine schwenkbare Weise aufweist;
- einen Grundrahmen (14), welcher benachbart dem Förderer (42) angebracht ist;
- einen Träger für den Drehzapfen (12), welcher auf dem Grundrahmen (14) angebracht ist, so dass der Sprüharm (10) von einer Betriebsposition, wobei der Sprüharm (10) sich über den Förderer (42) erstreckt, in eine Ruheposition geschwenkt werden kann;
- eine Mehrzahl von Sprühdüsen (54, 56, 58, 60), welche auf dem Sprüharm (10) zum Aufsprühen einer Beschichtung auf die Gipskartonplatten (44, 46, 48, 50) auf dem Förderer (42) angeordnet sind; und
- ein Pumpensystem (18, 26, 28, 34) auf dem Rahmen (14), um die Beschichtung der Mehrzahl von Sprühdüsen (54, 56, 58, 60) zuzuführen,
**dadurch gekennzeichnet, dass**
die Mehrzahl der Düsen (54, 56, 58, 60) in Gruppen angeordnet ist und die Düsen in jeder Gruppe gestaffelt sind, so dass wenigstens einige der Düsen in jeder Gruppe sich in unterschiedlichen Abständen vom Sprüharm (10) in Bezug zu einander befinden.

2. Fertigungsstraße gemäß Anspruch 1, wobei der Sprüharm (10) sich nicht über dem Förderer (42) befindet, wenn der Sprüharm (10) sich in der Ruheposition befindet.

3. Fertigungsstraße gemäß Anspruch 1 oder 2, wobei, wenn der Sprüharm (10) in der Betriebsposition ist, der Sprüharm (10) sich stromaufwärts eines Trockners für die Fertigungsstraße befindet.

4. Fertigungsstraße gemäß einem der Ansprüche 1 bis 3, des Weiteren umfassend einen Behälter (112) zum Aufnehmen der Beschichtung vor dem Besprühen der Gipskartonplatten (44, 46, 48, 50).

5. Fertigungsstraße gemäß einem der Ansprüche 1 bis 4, des Weiteren umfassend einen Controller zum ausschließlichen Aufdrehen des Sprühnebels, wenn sich eine Platte (44, 46, 48, 50) unter den Düsen (54, 56, 58, 60) befindet.

6. Fertigungsstraße gemäß Anspruch 5, wobei der Controller durch einen Zeitgeber aktiviert wird, um den Sprühnebel zu steuern.

7. Fertigungsstraße gemäß einem der Ansprüche 1 bis 6, wobei die Düsen (54, 56, 58, 60) durch Druckluft betätigt werden.

8. Fertigungsstraße gemäß einem der Ansprüche 1 bis 7, des Weiteren umfassend einen oder mehrere Filter (88, 108) zum Filtern der Beschichtung vor dem Zuführen der Beschichtung zu den Düsen (54, 56, 58, 60).

9. Fertigungsstraße gemäß einem der Ansprüche 1 bis 8, wobei der Grundrahmen (14) auf Rädern angebracht ist, so dass der Grundrahmen zu einem entfernten Ort bewegt werden kann.

10. Fertigungsstraße gemäß einem der Ansprüche 1 bis 9, wobei das Pumpensystem (18, 26, 28, 34) eine Mehrzahl von Pumpen (26, 28) umfasst, welche parallel zueinander angeordnet sind.

11. Fertigungsstraße gemäß einem der Ansprüche 1 bis 10, wobei die Beschichtung einen mineralischen Füller umfasst.

12. Fertigungsstraße gemäß einem der Ansprüche 1 bis 11, des Weiteren umfassend Mittel (66) zum Zuführen von zerstäubender Luft zu den Düsen.

13. Sprüharm (10) für eine Fertigungsstraße für Gipskartonplatten (44, 46, 48, 50), wobei der Sprüharm (10) umfasst:
- einen Halteträger (62);
- einen Drehzapfen (12) an einem seiner Enden zum Tragen des Sprüharms (10) auf eine schwenkbare Weise, so dass der Sprüharm (10) mindestens um ungefähr 90 Grad von einer Betriebsposition in eine Ruheposition geschwenkt werden kann; und
- eine Mehrzahl von Sprühdüsen (54, 56, 58, 60), welche zum Aufsprühen auf Gipskartonplatten (44, 46, 48, 50) auf dem Halteträger (62) angeordnet sind, **dadurch gekennzeichnet, dass** die Mehrzahl von Düsen (54, 56, 58, 60) in Gruppen angeordnet ist und die Düsen in jeder Gruppe gestaffelt sind, so dass wenigstens einige der Düsen in jeder Gruppe sich an unterschiedlichen Abständen vom Halteträger (62) in Bezug zu einander befinden.

14. Sprüharm gemäß Anspruch 13, des Weiteren umfassend einen Controller zum Aufsprühen der Beschichtung nur dann, wenn sich eine Platte (44, 46, 48, 50) unter den Düsen (54, 56, 58, 60) befindet.

15. Sprüharm gemäß Anspruch 14, wobei der Controller durch einen Zeitgeber aktiviert wird, um den Sprühnebel zu steuern.

16. Sprüharm gemäß einem der Ansprüche 13 bis 15, wobei die Düsen (54, 56, 58, 60) durch Druckluft betätigt werden.

17. Sprüharm gemäß einem der Ansprüche 13 bis 16, des Weiteren umfassend einen oder mehrere Filter (88, 108) zum Filtern der Beschichtung vor dem Zuführen der Beschichtung zu den Düsen (54, 56, 58, 60).

18. Sprüharm gemäß einem der Ansprüche 13 bis 17, wobei die Beschichtung einen mineralischen Füller umfasst.

19. Sprüharm gemäß einem der Ansprüche 13 bis 18, des Weiteren umfassend Mittel (66) zum Zuführen von zerstäubender Luft zu den Düsen.

20. Verfahren zum Aufsprühen einer Beschichtung auf eine Gipskartonplatte (44, 46, 48, 50) auf einer Fertigungsstraße für Gipskartonplatten, wobei das Verfahren umfasst:
- Bereitstellen eines Sprüharms (10), welcher eine Mehrzahl von Düsen (54, 56, 58, 60) aufweist, welche daran über der Fertigungsstraße für Gipskartonplatten angebracht sind;
- wobei die Düsen (54, 56, 58, 60) so angeordnet sind, dass eine im Wesentlichen gleichmäßige Beschichtung auf der Platte (44, 46, 48, 50) aufgebracht wird;
**dadurch gekennzeichnet, dass**
die Mehrzahl von Düsen (54, 56, 58, 60) in Gruppen angeordnet ist und die Düsen in jeder Gruppe gestaffelt sind, so dass wenigstens einige der Düsen in jeder Gruppe sich an unterschiedlichen Abständen vom Sprüharm (10) in Bezug zu einander befinden, und die Düsen (54, 56, 58, 60) des weiteren so angeordnet sind, dass der Sprühnebel aus jeder Düse weniger als eine gesamte Breite der Gipskartonplatte (44, 46, 48, 50) auf der Fertigungsstraße bedeckt;
Ausstoßen einer Beschichtung aus den Sprühdüsen (54, 56, 58, 60), so dass eine Mehrzahl von überlappenden Sprühnebeln aufeinander folgend auf die Gipskartonplatte (44, 46, 48, 50) gesprüht wird.

21. Verfahren gemäß Anspruch 20, wobei die Beschichtung auf den Gipskarton aufgebracht wird, bevor die Platte durch den Trockner wandert.

22. Verfahren gemäß Anspruch 20 oder 21, wobei ein Zeitgeber verwendet wird, um den Sprühnebel auf und ab zu drehen, so dass der Sprühnebel nur ausgestoßen wird, wenn eine Gipskartonplatte (44, 46, 48, 50) sich unter den Düsen (54, 56, 58, 60) befindet.

23. Verfahren gemäß einem der Ansprüche 20 bis 22, wobei der Sprüharm (10) schwenkbar angebracht ist, und des Weiteren umfassend den Schritt des Schwenkens des Sprüharms (10) weg von der Fertigungsstraße nach dem Beschichten der Gipskartonplatte (44, 46, 48, 50).

24. Verfahren gemäß einem der Ansprüche 20 bis 23, wobei der Sprüharm (10) einer der Ansprüche 13 bis 19 ist.

25. Einsatz des Sprüharms gemäß einem der Ansprüche 13 bis 19 zum Aufsprühen einer Beschichtung auf einer Gipskartonplatte.

26. Einsatz der Vorrichtung gemäß Anspruch 25, wobei die Beschichtung einen mineralischen Füller umfasst.

## Revendications

1. Une chaîne de fabrication de plaques de plâtre comprenant :
- un transporteur (42) pour déplacer les plaques de plâtre (44, 46, 48, 60) le long d'une ligne ;
- un bras de pulvérisation (10) présentant un pivot (12) à l'une de ses extrémités pour supporter le bras de pulvérisation (10) d'une façon pivotante;
- un cadre de base (14) monté adjacent au transporteur (42) ;
- un support pour le pivot (12) monté sur le cadre de base (14) de telle sorte que le bras de pulvérisation (10) peut être pivoté depuis une position fonctionnelle dans laquelle le bras de pulvérisation (10) s'étend au-dessus du transporteur (42) jusqu'à une position de repos ;
- une pluralité de buses de pulvérisation (54, 56, 58, 60) agencées sur le bras de pulvérisation (10) pour pulvériser un revêtement sur les plaques de plâtre (44, 46, 48, 50) situées sur le transporteur (42) et
- un système de pompage (18, 26, 28, 34) situé sur le cadre (14) permettant d'alimenter la pluralité de buses de pulvérisation (54, 56, 58, 60) en revêtement,
**caractérisée en ce que** la pluralité de buses (54, 56, 58, 60) sont agencées en groupements et les buses de chaque groupement sont décalées de sorte qu'au moins certaines parmi les buses faisant partie de chaque groupement se trouvent à des distances différentes du bras de pulvérisation (10) les unes par rapport aux autres.

2. La chaîne de fabrication de la revendication 1, dans laquelle le bras de pulvérisation (10) ne se trouve pas au-dessus du transporteur (42) lorsque le bras de pulvérisation (10) se trouve dans la position de repos.

3. La chaîne de fabrication de la revendication 1 ou 2, dans laquelle lorsque le bras de pulvérisation (10) se trouve dans la position fonctionnelle, le bras de pulvérisation (10) est situé en amont d'un sécheur pour la chaîne de fabrication.

4. La chaîne de fabrication selon l'une quelconque des revendications 1 à 3, comprenant en outre un réservoir (112) pour contenir le revêtement avant la pulvérisation sur les plaques de plâtre (44, 46, 48, 50).

5. La chaîne de fabrication selon l'une quelconque des revendications 1 à 4, comprenant en outre un contrôleur destiné à activer la pulvérisation uniquement lorsqu'une plaque (44, 46, 48, 50) se trouve en dessous des buses (54, 56, 58, 60).

6. La chaîne de fabrication de la revendication 5, dans laquelle le contrôleur est activé par une minuterie pour commander la pulvérisation.

7. La chaîne de fabrication selon l'une quelconque des revendications 1 à 6, dans laquelle les buses (54, 56, 58, 60) sont activées par de l'air pressurisé.

8. La chaîne de fabrication selon l'une quelconque des revendications 1 à 7, comprenant en outre un ou plusieurs filtres (88, 108) pour filtrer le revêtement avant l'alimentation des buses (54, 56, 58, 60) en revêtement.

9. La chaîne de fabrication selon l'une quelconque des revendications 1 à 8, dans laquelle le cadre de base (14) est monté sur des roues permettant de déplacer le cadre de base à un emplacement éloigné.

10. La chaîne de fabrication selon l'une quelconque des revendications 1 à 9, dans laquelle le système de pompage (18, 26, 28, 34) comprend une pluralité de pompes (26, 28) agencées en parallèle.

11. La chaîne de fabrication selon l'une quelconque des revendications 1 à 10, dans laquelle le produit de revêtement comprend une charge minérale.

12. La chaîne de fabrication selon l'une quelconque des revendications 1 à 11, comprenant en outre un moyen permettant d'alimenter les buses en air atomisé.

13. Un bras de pulvérisation (10) pour une chaîne de fabrication de plaques de plâtre (44, 46, 48, 50), le bras de pulvérisation (10) comprenant :
- une poutre de support (62) ;
- un pivot (12) à l'une de ses extrémités pour supporter le bras de pulvérisation (10) d'une façon pivotante de telle sorte que le bras de pulvérisation (10) peut être pivoté d'au moins 90 degrés depuis une position fonctionnelle jusqu'à une position de repos ; et
- une pluralité de buses de pulvérisation (54, 56, 58, 60) agencées sur la poutre de support (62) pour pulvériser un revêtement sur des plaques de plâtre (44, 46, 48, 50),
**caractérisé en ce que** la pluralité de buses (54, 56, 58, 60) sont agencées en groupements et les buses de chaque groupement sont décalées de sorte qu'au moins certaines parmi les buses de chaque groupement se trouvent à des distances différentes de la poutre de support (62) les unes par rapport aux autres.

14. Le bras de pulvérisation de la revendication 13, comprenant en outre un contrôleur pour assurer la pulvérisation du revêtement uniquement lorsqu'une plaque (44, 46, 48, 50) se trouve en dessous des buses (54, 56, 58, 60).

15. Le bras de pulvérisation de la revendication 14, dans lequel le contrôleur est activé par une minuterie pour commander la pulvérisation.

16. Le bras de pulvérisation selon l'une quelconque des revendications 13 à 15, dans lequel les buses (54, 56, 58, 60) sont activées par de l'air pressurisé.

17. Le bras de pulvérisation selon l'une quelconque des revendications 13 à 16, comprenant en outre un ou plusieurs filtres (88, 108) pour filtrer le produit de revêtement avant d'alimenter les buses (54, 56, 58, 60) en produit de revêtement.

18. Le bras de pulvérisation selon l'une quelconque des revendications 13 à 17, dans lequel le produit de revêtement comprend une charge minérale.

19. Le bras de pulvérisation selon l'une quelconque des revendications 13 à 18, comprenant en outre des moyens (66) pour alimenter les buses en air atomisé.

20. Un procédé pour pulvériser un revêtement sur une plaque de plâtre (44, 46, 48, 50) sur une chaîne de fabrication de plaques de plâtre, le procédé comprenant :
- la fourniture d'un bras de pulvérisation (10) présentant une pluralité de buses (54, 56, 58, 60) fixées au bras au-dessus de la chaîne de fabrication de plaques de plâtre dans lequel les buses (54, 56, 58, 60) sont agencées de sorte qu'un revêtement sensiblement uniforme soit appliqué à la plaque (44, 46, 48, 50), **caractérisé en ce que**,
- la pluralité de buses sont agencées en groupements et les buses de chaque groupement sont décalées de sorte qu'au moins certaines parmi les buses de chaque groupement se trouvent à des distances différentes du bras de pulvérisation (10) les unes par rapport aux autres, et les buses (54, 56, 58, 60) sont en outre agencées de sorte que le jet émis de chaque buse recouvre une largeur inférieure à la largeur totale de la plaque de plâtre (44, 46, 48, 50) sur la chaîne de fabrication ;
- la projection d'un revêtement à partir des buses de pulvérisation (54, 56, 58, 60) de sorte qu'une pluralité de jet qui se recouvrent soient pulvérisés sur la plaque de plâtre (44, 46, 48, 50) successivement.

21. Le procédé selon la revendication 20, dans lequel le revêtement est appliqué au plâtre avant que la plaque passe à travers un sécheur.

22. Le procédé selon la revendication 20 ou 21, dans lequel une minuterie est utilisée pour activer et désactiver la pulvérisation de sorte que la pulvérisation ne soit effectuée que lorsqu'une plaque de plâtre (44, 46, 48, 50) se trouve en dessous des buses (54, 56, 58, 60).

23. Le procédé selon l'une quelconque des revendications 20 à 22, dans lequel le bras de pulvérisation (10) est monté de façon pivotante, et comprend en outre l'étape consistant à pivoter le bras de pulvérisation (10) pour l'éloigner de la chaîne de fabrication après avoir revêtu la plaque de plâtre (44, 46, 48, 50).

24. Le procédé selon l'une quelconque des revendications 20 à 23, dans lequel le bras de pulvérisation (10) est le bras selon l'une quelconque des revendications (13 à 19).

25. Utilisation du bras de pulvérisation selon l'une quelconque des revendications 13 à 19 pour pulvériser un revêtement sur une plaque de plâtre.

26. L'utilisation du dispositif de la revendication 25, dans laquelle le produit de revêtement comprend une charge minérale.
